Europäisches Patentamt

European Patent Office

Office européen des brevets

(19)

(11) Veröffentlichungsnummer : **0 202 431**
**B1**

(12) **EUROPÄISCHE PATENTSCHRIFT**

(45) Veröffentlichungstag der Patentschrift :
13.12.89

(21) Anmeldenummer : 86104162.2

(22) Anmeldetag : 26.03.86

(51) Int. Cl.⁴ : **A 61 C   5/08**

(54) **Hütchen zur Herstellung einer dentalen Verblendkrone.**

(30) Priorität : 29.03.85 DE 3511487

(43) Veröffentlichungstag der Anmeldung :
26.11.86 Patentblatt 86/48

(45) Bekanntmachung des Hinweises auf die Patenterteilung : 13.12.89 Patentblatt 89/50

(84) Benannte Vertragsstaaten :
AT BE CH DE FR GB IT LI LU NL SE

(56) Entgegenhaltungen :
EP--A-- 0 104 320
WO--A--85 /014 33
DE--A--   670 466

(73) Patentinhaber : Truetsch, Horst
Stadtring 244
D-6120 Michelstadt (DE)

(72) Erfinder : Truetsch, Horst
Stadtring 244
D-6120 Michelstadt (DE)

(74) Vertreter : Schumacher, Bernd, Dipl.-Ing.
Am Schwaberg 13
D-6450 Hanau 6 (DE)

EP 0 202 431 B1

## Beschreibung

Die Erfindung liegt auf dem Gebiet der metallkeramischen Verblendkronen, die als Zahnersatz Anwendung finden und bei denen eine aus Metallfolie gebildete Folienkappe die Basis für das Kronengerüst bildet. Im speziellen befaßt sich die Erfindung mit der Gestalt eines kegelförmigen Hütchens aus Metallfolie, welches zu einer Folienkappe weiter verarbeitet wird, indem das Hütchen an einen Modellstumpf, der von dem durch Abschleifen erhaltenen und zu überkronenden Zahnstumpf im Mund eines Patienten durch Abdruck gefertigt worden ist, angepaßt wird. Die so erhaltene und hinsichtlich der Kontur festgelegte Folienkappe bildet die Basis für das Kronengerüst, mit welchem weitere Fertigungschritte — darunter Auftrag und Brennen der Keramik-Masse — zur metallkeramischen Verblendkrone bzw. Verblend-Folien-Keramik-Krone vorgenommen werden.

Die Erfindung betrifft ein kegelförmiges Hütchen aus Metallfolie für die Herstellung des Kronengerüsts einer metallkeramischen Verblendkrone der im Oberbegriff des ersten Anspruchs angegebenen Gattung.

Im Stand der Technik ist unter der Bezeichnung « in Schirmform vorgefaltete Kera-Platin-Folie » ein schirmförmiges Fertigteil bekannt. Dieses Fertigteil besteht aus einer Metallfolie, die zu einem kegelförmigen Hütchen geformt ist und zur Weiterverarbeitung zu einer Folienkappe dient. Die Ausfaltungen des schirmförmigen Fertigteils weisen im wesentlichen die Form eines gleichschenkligen, langgestreckten Dreieck-Rahmens auf. Zur Anpassung des Hütchens an den Modellstumpf werden diese Rahmen bzw. Schenkel nach einer besonderen Faltmethode flachgedrückt und nacheinander umgelegt (Zeitschrift « Die Quintessenz der Zahntechnik » 6/1983 Seite 645-653 ; EP-A1 0104320).

Die Erfindung zielt nun darauf ab, ein kegelförmiges Hütchen aus Metallfolie der im Oberbegriff des ersten Anspruchs angegebenen Gattung zu schaffen, wobei die Ausfaltungen im Querschnitt gesehen im wesentlichen symmetrisch zu einer Radial-Ebene angeordnet sind und eine unbeabsichtigte Veränderung dieser Anordnung bei der Handhabung des Hütchens zur Herstellung einer Folienkappe vermieden ist.

Dies gelingt bei einem Hütchen der im Oberbegriff des ersten Anspruchs angegebenen Gattung dadurch, daß die Ausfaltungen im Querschnitt gesehen jeweils die Form eines flachen bzw. flach gedrückten, gleichschenkligen Trapez-Rahmens aufweisen, welche Rahmen jeweils aus einer außenliegenden Grundseite und zwei von deren Enden ausgehenden, nach innen konvergierenden Schenkeln gebildet sind.

Durch diese gleichmäßige Ausbildung der Ausfaltungen und damit auch des Hutmantels des Hütchens werden während des Verformungsvorganges der Folie im Folienmaterial eingelagerte Spannungen in einer Falte weitgehend gegeneinander ausgeglichen. Dadurch ist die Empfindlichkeit der aus hauchdünnen Folien hergestellten Hütchen gegen eine Verformung bei der Handhabung wesentlich verringert. Die ist vor allem bei Anwendung von vergleichsweise biegsamen und-/oder dünnen Platinfolien von besonderer Bedeutung. Die Folienstärken liegen etwa in der Größenordnund von 0,025 mm bis 0,35 mm. Durch die Ausbildung der Ausfaltungen wird weiter erreicht, daß bei der Handhabung des Hütchens, also im speziellen beim Greifen und Positionieren des Hütchens mit den Fingern, unerwünschte Änderungen in der Gestalt der Ausfaltungen und vor allem deren Lage und Ausrichtung praktisch ausgeschlossen sind. Gleichwohl lassen sich die so gestalteten Hütchen im Vergleich zum Stand der Technik einfacher und gefahrloser an den Modellstumpf anpassen und durch Anwendung von Druck in eine Folienkappe überführen.

Weiterbildungen dieses kegelförmigen Hütchens sind Gegenstand der Ansprüche 2 bis 7.

Durch die Weiterbildung nach Anspruch 2, vorzugsweise in Verbindung mit der nach Anspruch 3, ist ein Hütchen gegeben, das zum einen eine im wesentlichen geschlossene und zumindest im Bereich des Hutrandes (späterer Cervikalbereich) eine dreilagige Mantelfläche und zum anderen — auch bei Anwendung von dünnen Platinfolien-eine vergleichsweise formstabile Mantelfläche des Hütchens aufweist.

Insbesondere zur Anpassung an spitze Modellstümpfe ist es von Vorteil, wenn der Scheitel des Hütchens nach Anspruch 4 kappenförmig abgerundet ist. Dadurch können Bruchstellen in der Metallfolie sowohl bei der Herstellung des Hütchens (wenn die Folie an die Oberfläche eines dem Hütchen entsprechend konturierten, mit trapezförmigen Vorsprüngen versehenen kegeligen Körpers aufgelegt und angedrückt wird), als auch bei der Weiterverarbeitung des Hütchens zur Folienkappe vermieden werden. Auch ist dadurch eine verbesserte Möglichkeit der Anpassung eines kegelförmigen Hütchens an in einem gewissen Bereich unterschiedliche Zahnstumpfausbildungen und -größen gegeben.

Durch die Weiterbildung nach Anspruch 5 ist ein Hütchen gegeben, das im Bereich des Hutrandes vergleichsweise stabilisiert ist und im oberen, dem Hutscheitel nahen Bereich, noch eine ausreichende Flexibilität besitzt, so daß es mit den Fingern an unterschiedlich große Stümpfe bzw. Modellstümpfe angedrückt und adaptiert werden kann. Damit ist die Möglichkeit gegeben, praktisch eine Größe von Hütchen für einen bestimmten Bereich von Gestaltungen und Größen von Zahnstümpfen einzusetzen und somit für den Bereich der üblichen Zahnstumpfgrößen die Zahl der bereit zu haltenden bzw. bereit zu stellenden Hütchengrößen gering zu halten, in der Praxis wird man sich auf eine Hütchengröße in verschiedenen — in der Regel drei bis fünf — Hütchenhöhen bzw. Hütchenlängen beschränken können.

Die Zeichnung zeigt schematisch :

Figur 1 eine Seitenansicht eines kegelförmigen Hütchens aus Metallfolie,

Figur 2 in vergrößertem Maßstab einen Schnitt längs der Linie II-II in Figur 1 und

Figur 3 in vergrößertem Maßstab einen Schnitt längs der Linie III-III in Figur 1.

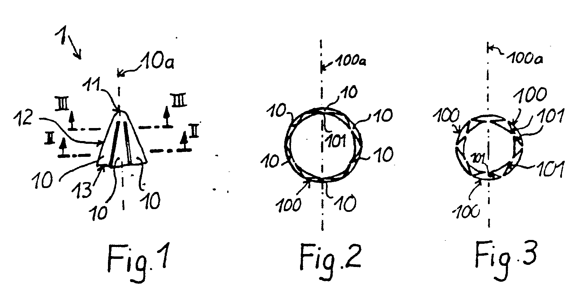

In den Figuren 1, 2 und 3 ist ein kegelförmiges Hütchen 1 aus Metallfolie, vorzugsweise aus einer Platinfolie mit einer Dicke von 0,027 mm, dargestellt. Das Hütchen weist sechs über den Umfang verteilt angeordnete Faltungen bzw. Ausfaltungen 10 auf. Die Ausfaltungen 10 verlaufen im wesentlichen in Richtung einer Mantellinie 10a ; zu der in Figur 1 in der Draufsicht vollständig dargestellten Ausfaltung 10 ist die zugehörende Mantellinie 10a strichpunktiert angedeutet. Die Ausfaltungen 10 weisen im Querschnitt gesehen jeweils die Form eines flachen bzw. flach gedrückten, gleichschenkligen Trapez- bzw. Schwalbenschwanz-Rahmen auf, bestehend aus einer Grundseite 100 und sich daran anschließenden, nach innen konvergierenden Schenkeln 101. Die Ausfaltungen 10 sind jeweils zu einer bzw. ihrer Radial-Ebene 100a symmetrisch. Zwischen benachbarten Grundseiten 100 ist bei dem in Figur 1 dargestellten Hütchen zumindest im Bereich des Hutrandes (siehe Figur 2) praktisch kein Abstand belassen, so daß die Grundlinien 100 dicht aneinander stoßen. Der Hutmantel 12 des Hütchens wird somit praktisch von den außenliegenden Grundseiten 100 gebildet. In dem dem Hutscheitel 11 nahen Bereich des Hütchens 1 ist zwischen den Grundseiten 100 (siehe Figur 3) im Vergleich zur Darstellung in Figur 2 noch ein kleiner Abstand bzw. Spalt belassen.

Wie aus Figur 2 und 3 in vergleichender Betrachtung ersichtlich ist, sind die Trapez-Rahmen der Ausfaltungen 10 in Figur 2 starker zusammengedrückt als die Trapez-Rahmen in Figur 3. Die Teile der Trapez-Rahmen (Fig. 2) liegen schon fast flächig aneinander. Daher ist die Formstabilität des Hütchens in diesem Bereich vergleichsweise groß und nimmt zum Hutscheitel 11 hin entsprechend des noch offeneren, weniger flach gedrückten Trapez-Rahmens ab. Dadurch ist eine Anpassung des Hütchens in den Bereichen oberhalb des stabilisierten Hutrandbereiches und damit eine Anpassung an unterschiedlich große Modellstümpfe gegeben.

## Patentansprüche

1. Kegelförmiges Hütchen aus Metallfolie für die Herstellung des Kronengerüstes einer metallkeramischen Verblendkrone, mit mehreren, über den Umfang verteilt angeordneten, im wesentlichen in Richtung einer Mantellinie verlaufenden Ausfaltungen des Hutmantels, dadurch gekennzeichnet, daß die Ausfaltungen (10) im Querschnitt gesehen jeweils die Form eines flachen bzw. flach gedrückten, gleichschenkligen Trapez-Rahmens (100, 101) aufweisen, der aus einer außenliegenden Grundseite (100) und zwei nach innen konvergierenden Schenkeln (101) gebildet ist.

2. Hütchen nach Anspruch 1, dadurch gekennzeichnet, daß der Außenumfang des Hutmantels (12) im wesentlichen von den außenliegenden Grundseiten (100) der Trapez-Rahmen (100, 101) gebildet ist.

3. Hütchen nach Anspruch 2, dadurch gekennzeichnet, daß zwischen benachbarten Grundseiten (100) ein geringer oder kein Abstand belassen ist.

4. Hütchen nach Anspruch 1, 2 oder 3, dadurch gekennzeichnet, daß der Hutscheitel (11) kappenförmig abgestumpft ausgebildet ist.

5. Hütchen nach Anspruch 1 bis 4, dadurch gekennzeichnet, daß der Grad des Flachgedrücktseins der Trapez-Rahmen (100, 101) über die Länge der Ausfaltungen (10) gesehen vom Hutrand (13) zum Hutscheitel (11) hin abnimmt.

6. Hütchen nach Anspruch 1 bis 5, dadurch gekennzeichnet, daß sechs Ausfaltungen (10) vorgesehen sind.

7. Hütchen nach Anspruch 1 bis 6, dadurch gekennzeichnet, daß die Metallfolie eine Platinfolie, vorzugsweise eine Platinfolie von einer Dicke von 0,025 bis 0,030 mm, ist.

## Claims

1. Conical matrix of metal foil for producing a supporting member for a metal-ceramic veneered crown, comprising several pleats distributed along the circumference of the lateral area of the coping and extending substantially in the direction of a generating line, characterised in that the cross-sectional shape of each of the pleats (10) is a flat or flattened isosceles trapezoidal frame (100, 101), formed by an external base (100) and two inwardly converging lateral sides (101).

2. Matrix according to claim 1, characterised in that the outer circumference of the lateral area (12) of the coping is essentially formed by the external bases (100) of the trapezoidal frames (100, 101).

3. Matrix according to claim 2, characterised in that there is a small space or no space at all left between adjacent bases (100).

4. Matrix according to claim 1, 2 or 3, characterised in that the vertex (11) of the coping is truncated in a cap-shaped manner.

5. Matrix according to claims 1 to 4, characterised in that the degree of flattening of the trapezoidal frames (100, 101) over the length of the pleats (10) decreases from the edge (13) of the coping to the vertex (11) of the coping.

6. Matrix according to claims 1 to 5, characterised in that six pleats (10) are provided.

7. Matrix according to claims 1 to 6, characterised in that the metal foil is a platinum foil, preferably a platinum foil having a thickness of 0.025 to 0.030 mm.

## Revendications

1. Chapeau conique en feuille de métal pour la réalisation d'une ossature de couronne destinée à une couronne de revêtement de cermet, comprenant plusieurs plis ronds de l'enveloppe du chapeau répartis sur la circonférence et s'étendant sensiblement dans le sens d'une génératrice, caractérisé en ce que, vu en coupe transversale, les plis ronds (10) présentent respectivement la forme d'un cadre trapézoïdal à ailes égales (100, 101) plat et respectivement aplati qui est formé d'un côté de base extérieur (100) et de deux ailes (101) convergeant vers l'intérieur.

2. Chapeau selon la revendication 1, caractérisé en ce que la périphérie extérieure de l'enveloppe du chapeau (12) est constituée essentiellement par les côtés de base extérieurs (100) des cadres trapézoïdaux (100, 101).

3. Chapeau selon la revendication 2, caractérisé en ce que la distance subsistant entre des côtés de base (100) voisins est faible ou nulle.

4. Chapeau selon l'une des revendications 1, 2 ou 3, caractérisé en ce que le sommet du chapeau (11) est épointé en forme de capuchon.

5. Chapeau selon l'une des revendications 1 à 4, caractérisé en ce que, vu sur la longueur des plis ronds (10), le degré d'aplatissement des cadres trapézoïdaux (100, 101) diminue du bord du chapeau (13) vers le sommet du chapeau (11).

6. Chapeau selon l'une des revendications 1 à 5, caractérisé en ce qu'il comprend six plis ronds (10).

7. Chapeau selon l'une des revendications 1 à 6, caractérisé en ce que la feuille de métal est une feuille de platine, de préférence une feuille de platine d'une épaisseur de 0,025 à 0,030 mm.

Fig.1

Fig.2

Fig.3